# EUROPÄISCHE PATENTSCHRIFT

(11) **EP 2 561 002 B1**
(45) Veröffentlichungstag und Bekanntmachung des Hinweises auf die Patenterteilung: **05.03.2014**
(21) Anmeldenummer: 11714791.8
(22) Anmeldetag: 19.04.2011
(51) Int. Cl.: C08G 18/40, C08G 18/42, C08G 18/48, C08G 18/76, C08G 101/00

(54) **VERFAHREN ZUR HERSTELLUNG VON POLYURETHAN-HARTSCHAUMSTOFFEN**
METHOD FOR PRODUCING POLYURETHANE RIGID FOAMS
PROCÉDÉ DE PRODUCTION DE MOUSSES DURES DE POLYURÉTHANE

(30) Priorität: 23.04.2010 EP 10160927
(43) Veröffentlichungstag der Anmeldung: 27.02.2013
(73) Patentinhaber: BASF SE, 67056 Ludwigshafen (DE)
(72) Erfinder: KÖSTERS, Michael, 49504 Lotte (DE); KAMPF, Gunnar, 32351 Stemwede-Haldem (DE); FABISIAK, Roland, 49448 Brockum (DE); JACOBMEIER, Olaf, 32312 Lübbecke (DE)
(86) Internationale Anmeldenummer: PCT/EP2011/056252
(87) Internationale Veröffentlichungsnummer: WO 2011/131682

(56) Entgegenhaltungen:
- EP-A1- 1 577 332
- EP-A1- 1 770 118
- DE-A1-102004 044 915
- GB-A- 2 313 838
- US-A1- 2008 207 787

## Beschreibung

Gegenstand der Erfindung ist ein Verfahren zur Herstellung von Polyurethan-Hartschaumstoffen durch Umsetzung von Polyisocyanaten mit b) Verbindungen mit mindestens zwei mit Isocyanatgruppen reaktiven Wasserstoffatomen.

Polyurethan-Hartschaumstoffe sind seit langem bekannt und werden vorwiegend zur Wärme- und Kälteisolation, z. B. in Kühlgeräten, in Warmwasserspeichern, in Femwärmerohren oder im Bauwesen, beispielsweise in Sandwichelementen, eingesetzt. Eine zusammenfassende Übersicht über die Herstellung und Anwendung Polyurethan-Hartschaumstoffen findet sich beispielsweise im Kunststoff-Handbuch, Band 7, Polyurethane 1. Auflage 1966, herausgegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München. Wien.

Ihre Herstellung erfolgt zumeist durch Umsetzung von Polyisocyanaten mit Verbindungen mit mindestens zwei mit Isocyanatgruppen reaktiven Wasserstoffatomen in Anwesenheit von Katalysatoren, Treibmitteln sowie Hilfs- und/oder Zusatzstoffen.

Wesentliche Anforderungen an Polyurethan-Hartschaumstoffe sind eine niedrige Wärmeleitfähigkeit, eine gute Fließfähigkeit, eine ausreichende Haftung des Schaums an den Deckschichten und gute mechanische Eigenschaften.

Ein weiteres Erfordernis an Polyurethan-Hartschaumstoffe ist ein gutes Brandverhalten. Dies ist insbesondere bei Anwendungen im Baubereich, besonders bei Verbundelementen aus metallischen Deckschichten und einem Kem aus einem Polyurethan- oder einem Polyisocyanuratschaum von großer Bedeutung. Unter einem Polyisocyanuratschaum wird üblicherweise ein Schaumstoff verstanden, der neben Urethangruppen auch Isocyanuratgruppen enthält. Im Folgenden kann der Begriff Polyurethan-Hartschaumstoff auch Polyisocyanuratschaum einschließen.

Insbesondere Polyisocyanuratschaumstoffe zeigen häufig eine unzureichende Haftung an den metallischen Deckschichten. Um diesen Mangel zu beheben, wird üblicherweise zwischen der Deckschicht und dem Schaumstoff ein Haftvermittler aufgebracht, wie beispielsweise in WO 99/00559 beschrieben.

In WO 2005/090432 wird ein Verfahren zur Herstellung von Polyurethan-Hartschaumstoffen beschrieben, zu dessen Herstellung ein Gemisch aus einem Polyesteralkohol auf Basis einer aromatischen Carbonsäure und mindestens ein Polyetheralkohol auf der Basis von aromatischen Aminen eingesetzt wird. durch den Einsatz der Polyesteralkohole soll die Wärmeleitfähigkeit des Schaums gesenkt und die Verträglichkeit mit dem Treibmittel verbessert werden. Der Einsatz der nach diesem Verfahren hergestellten Schaumstoffe erfolgt vorzugsweise in Kühlgeräten.

Eine weitere ständige Forderung beim Einsatz von Polyurethan-Hartschaumstoffen ist die Verbesserung der Flammfestigkeit der Schaumstoffe. Hierzu werden dem Schaumstoff zumeist Flammschutzmittel zugesetzt. Durch den Zusatz der Fiammschutzmittel können sich die mechanischen Eigenschaften und die Verarbeitungseigenschaften der Schaumstoffe ändern. Weiterhin ist es wünschenswert, bei der Herstellung der Polyurethan-Hartschaumstoffe den Einsatz von Flammschutzmitteln, insbesondere solchen auf der Basis von Halogenen, insbesondere von Brom, einzuschränken.

US-A 2008/207787 offenbart PolyurethanlPolyvinylchlorid Hybrid-Hartschaumstoffe mit verbesserten Flammschutzeigenschaften.

Weiterhin ist es ein ständiges Erfordernis, die Haftung der Schaumstoffe auf den Deckschichten zu verbessern, insbesondere den Einsatz von Haftvermittlern zu reduzieren oder ganz zu vermeiden.

Es war somit die Aufgabe der Erfindung, ein Verfahren zur Herstellung von Polyurethan-Hartschaumstoffen zu entwickeln, die gute mechanische Eigenschaften, eine gute Haftung auf Deckschichten und eine gute Flammfestigkeit aufweisen, gut mit Treibmitteln und Flammschutzmitteln verträglich sind und gut verarbeitbar sind.

Die Aufgabe konnte überraschenderweise gelöst werden durch ein Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Gegenwart von
c) Treibmitteln,

in Gegenwart von Flammschutzmitteln d), dadurch gekennzeichnet, dass die Verbindungen mit mindestens zwei mit Isocyanatgruppen reaktiven Wasserstoffatomen b) mindestens einen aromatischen Polyesteralkohol bi) hergestellt unter Verwendung von mindestens einer Fettsäure, mindestens einen Polyetheralkohol bii) mit einer Funktionalität von 4 bis 8 und einer Hydroxylzahl im Bereich zwischen 300 und 600 mgKOH/g enthält und mindestens einen Polyetheralkohol biii) mit einer Funktionalität von 2 bis 4 und einer Hydroxylzahl Bereich zwischen 100 und kleiner 300 mgKOH/g enthalten, wobei das Gewichtsverhältnis der Komponente bi) zur Summe der Komponenten bii) und biii) kleiner 4 ist und großer 0,15 ist.

Die Hydroxylzahl wird dabei nach der DIN 53240 bestimmt.

Die Hydroxylzahl der Komponente b) beträgt vorzugsweise mindestens 175, insbesondere mindestens 225 mgKOH/g.

Weiterhin beträgt die Hydroxylzahl der Komponente b) vorzugsweise höchstens 325 mgKOH/g, besonders bevorzugt höchstens 300 mgKOH/g insbesondere höchstens 290 mgKOH/g.

Vorzugsweise weist der Polyesteralkohol bi) eine Funktionalität von 2-3 und eine Hydroxylzahl von 200 bis 300 mgKOH/g auf.

Der Polyesteralkohol bi) wird üblicherweise durch Umsetzung von Carbonsäuren und/oder deren Derivaten, insbesondere Estern und Anhydriden, mit Alkoholen hergestellt. Dabei sind die Carbonsäuren und/oder die Alkohole, vorzugsweise beide, mehrfunktionell.

Erfindungsgemäß wird der Polyesteralkohol bi) unter Verwendung mindestens einer Fettsäure hergestellt.

Die Fettsäuren können Hydroxylgruppen enthalten. Weiterhin können die Fettsäuren Doppelbindungen enthalten.

In einer Ausführungsform der Erfindung enthält die Fettsäure keine Hydroxylgruppen. In einer weiteren Ausführungsform der Erfindung enthält die Fettsäure keine Doppelbindungen.

Der mittlere Fettsäuregehalt der Komponenten b) ist dabei vorzugsweise größer als 1 Gew.-%, bevorzugt größer als 2,5 Gew.-%, bevorzugt größer als 4 Gew.-% und besonders bevorzugt größer als 5 Gew.-% bezogen auf das Gewicht der Komponenten b) und d).

Der mittlere Fettsäuregehalt der Komponente b) ist vorzugsweise kleiner als 30 Gew.-%, bevorzugt kleiner als 20 Gew.-% bezogen auf das Gesamtgewicht der Komponenten b) und d).

Vorzugsweise ist die Fettsäure oder das Fettsäurederivat eine Fettsäure oder ein Fettsäurederivat auf Basis nachwachsender Rohstoffe, ausgewählt aus der Gruppe bestehend aus Rizinusöl, Polyhydroxyfettsäuren, Ricinolsäure, Hydroxyl-modifizierten Ölen, Weintraubenkemöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkemöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Myristoleinsäure, Palmito-leinsäure, Ölsäure, Vaccensäure, Petroselinsäure, Gadoleinsäure, Erukasäure, Nervonsäure, Linolsäure, Linolensäure, Stearidonsäure, Arachidonsäure, Timnodonsäure, Clupanodonsäure und Cervonsäure.

Vorzugsweise wird als Fettsäure Ölsäure eingesetzt.

Wie oben beschrieben, wird der Polyesteralkohol bi) unter Verwendung von aromatischen Carbonsäuren oder deren Anhydriden hergestellt. Diese sind insbesondere ausgewählt aus der Gruppe, enthaltend Terephthalsäure, Phthalsäure und Phthalsäureanhydrid, hergestellt.

In einer Ausführungsform der Erfindung wird der Polyesteralkohol bi) unter Verwendung von Estern aromatischer Carbonsäuren hergestellt. Diese sind insbesondere ausgewählt aus der Gruppe, enthaltend Polyethylenterephthalat und Dimethylterephthalat, hergestellt wurde. Bei dem Polyethylenterephthalat kann es sich um Recyclingprodukte, insbesondere aus dem Recycling von Getränkeflaschen, handeln.

Besonders bevorzugt wird der Polyesteralkohol bi) unter Verwendung von Gemischen aus Carbonssäuren und deren Derivaten, die mindestens 50 Gew.-%, bezogen auf das Gewicht der Carbonsäuren, Terephthalsäure enthalten. In einer weiteren bevorzugten Ausführungsform der Erfindung wird ausschließlich Terephthalsäure als Carbonsäure eingesetzt.

Neben den genannten Carbonsäuren und deren Derivaten können auch die übrigen bekannten mehrfunktionellen Carbonsäuren eingesetzt werden, beispielsweise aliphatische Carbonsäuren, wie Adipinsäure oder Bernsteinsäure. Deren Gehalt sollte jedoch unter 50 Gew.-%, bezogen auf das Gewicht der Carbonsäuren, liegen.

Als Alkohole zur Herstellung der Polyesteralkohole bi) werden zumeist difunktionelle Alkohole, wie Ethylenglykol, Diethylenglykol, Polyethylenglykol, Propylenglykol, 1,3-Propandiol, 1,4-Butandiol, 1,5-Pentandiol, 1,6-Hexandiol, 2-Methyl-1,3-propandiol, 3-Methyl-1,5-Pentandiol und Alkoxylaten derselben, insbesondere Ethoxylaten derselben. Insbesondere ist das aliphatische Diol Diethylenglykol.

In einer Ausführungsform der Erfindung weist der Polyesteralkohol bi) einen Gehalt an Komponenten mit einer Funktionalität von > 2,9 von mindestens 200, bevorzugt mindestens 400, besonders bevorzugt mindestens 600, speziell mindestens 800 und im Besonderen mindestens 1000 mmol/kg Polyesteralkohol auf. Besonders bevorzugt sind dabei die in der Veresterung verwendeten Hydroxylgruppen enthaltenden Komponenten. Dabei handelt es sich vorzugsweise um mehr als zweifunktionelle Alkohole höherfunktionellen Polyols, ausgewählt aus der Gruppe bestehend aus Glycerin, alkoxyliertem Glycerin, Trimethylolpropan, alkoxyliertem Trimethylolpropan, Pentaerythritol und alkoxyliertem Pentaerythritol.

Erfindungsgemäß enthält die Komponente b) zusätzlich mindestens einen Polyetheralkohol biii) mit einer Funktionalität von 2 bis 4 und einer Hydroxylzahl im Bereich zwischen 100 und kleiner 300 mgKOH/g.

Die Polyetheralkohole bii) und biii) werden üblicherweise durch Anlagerung von Alkylenoxiden an H-funktionelle Startsubstanzen hergestellt. Dieses Verfahren ist allgemein bekannt und üblich für die Herstellung derartiger Produkte.

Als Startsubstanzen können Alkohole oder Amine eingesetzt werden. Als Amine können aliphatische Amine, wie Ethylendiamin eingesetzt werden. In einer anderen Ausführungsform der Erfindung können aromatische Amine, insbesondere Toluylendiamin (TDA) oder Gemische aus Diphenylmethandiamin und Polyphenylenpolymethylenpolyaminen eingesetzt werden. Vorzugsweise enthält die Komponente b) maximal 65 Gew.-%, bevorzugt maximal 40 Gew.-%, jeweils bezogen auf das Gewicht der Komponente a), Polyetheralkohole auf Basis aromatischer Amine.

In einer besonders bevorzugten Ausführungsform der Erfindung enthält die Komponente b) keine Polyetheralkohole auf Basis aliphatischer oder aromatischer Amine.

Zur Herstellung der Polyetheralkohole bii) und biii) sind somit als H-funktionelle Startsubstanzen mehrfunktionelle Alkohole bevorzugt.

Dabei handelt es sich insbesondere um 2- bis 8-funktionelle Alkohole. Beispiele hierfür sind Glykole, wie Ethylenglykol oder Propylenglykol, Glyzerin, Trimethylolpropan, Pentaerythrit, sowie Zuckeralkohole, wie Saccharose oder Sorbit. Möglich sind auch Mischungen von Alkoholen untereinander. Insbesondere die festen Startsubstanzen wie Saccharose oder Sorbit. Möglich sind auch Mischungen von Alkoholen untereinander. Insbesondere die festen Startsubstanzen wie Saccharose und Sorbit werden häufig mit flüssigen Startsubstanzen, wie Glykolen oder Glyzerin, gemischt.

Bevorzugt werden zur Herstellung der Polyole biii) 2- bis 3-funktionelle Alkohole, insbesondere Glyzerin oder Trimethylolpropan, eingesetzt. Zur Erhöhung der Funktionalität können auch höherfunktionelle Alkohole in geringen Mengen zugesetzt werden.

Zur Herstellung der Polyole bii) werden bevorzugt Mischungen aus hochfunktionellen Alkoholen, und den bereits genannten bei Raumtemperatur flüssigen Alkoholen, insbesondere Glyzerin, eingesetzt. Als hochfunktionelle Alkohole werden bevorzugt Zuckerverbindungen wie Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt. Besonders bevorzugt sind Zuckeralkohole, insbesondere Saccharose oder Sorbit.

Es hat sich gezeigt, dass die Verwendung von mit Sorbit gestarteten Polyetheralkoholen Vorteile bei der Verarbeitung und bei den Eigenschaften der Schaumstoffe bringt. So kommt es zu einer besseren Aushärtung und einer verbesserten Druckfestigkeit.

Als Alkylenoxide werden vorzugsweise Ethylenoxid, Propylenoxid oder Mischungen aus diesen Verbindungen eingesetzt. Besonders bevorzugt ist der Einsatz von reinem Propylenoxid.

Die Anlagerung der Alkylenoxide an die Startsubstanz erfolgt vorzugsweise in Anwesenheit von Katalysatoren. Zumeist werden als Katalysatoren basische Verbindungen eingesetzt, wobei die Oxide und insbesondere die Hydroxide von Alkali- oder Erdalkalimetallen die größte technische Bedeutung haben. Zumeist wird Kaliumhydroxid als Katalysator eingesetzt.

In einer Ausführungsform der Erfindung werden Amine als Katalysatoren zur Herstellung der Polyetheralkohole bii) und biii) insbesondere der Polyetheralkohole bii), eingesetzt. Dabei handelt es sich vorzugsweise um Amine mit mindestens einer tertiären Aminogruppe, Imidazole, Guanidine oder deren Derivate. Bevorzugt haben diese aminischen Katalysatoren mindestens eine mit Alkylenoxiden reaktive Gruppe, beispielsweise einer primäre oder sekundäre Aminogruppe oder, besonders bevorzugt, eine Hydroxylgruppe. Besonders bevorzugt handelt es sich bei diesen Katalysatoren um Aminoalkohole, wie Dimethylethanolamin. Derartige Katalysatoren werden insbesondere bei Verwendung von Saccharose enthaltenden Startsubstanzen eingesetzt.

Erfindungsgemäß ist das Gewichtsverhältnis der Komponente bi) zur Summe der Komponenten bii) und biii) kleiner 4.

Weiterhin ist das Gewichtsverhältnis der Komponente bi) zur Summe der Komponenten bii) und biii) bevorzugt größer 0,15.

Als Treibmittel können chemische und physikalische Treibmittel eingesetzt werden. chemische Treibmittel sind Verbindungen, die mit Isocyanatgruppen unter Abspaltung von Gasen, insbesondere Kohlendioxid bzw. Kohlendioxid und Kohlenmonoxid, reagieren. Zumeist handelt es sich um Wasser und/oder Ameisensäure, vorzugsweise um Wasser.

An Stelle von oder in Kombination mit den chemischen Treibmitteln können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrig siedende Alkane und Fluoralkane.

Die Treibmittel werden zumeist ausgewählt aus der Gruppe, enthaltend Wasser, Ameisensäure, Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1, bis 3 Kohlenstoffatomen in der Alkylkette, insbesondere Tetramethylsilan.

Beispielhaft seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,3,3,3-Pentafluorpropen, 1,1,1,3,3-Pentafluorbutan, 1,1,1,3,3-Pentafluorpropan, 1,1,1,2-Tetrafluorethan, 1,1,1,2,3-Pentafluorpropen, 1-Chlor-3,3,3-trifluorpropen, Difluorethan und Heptafluorpropan. Die genannten physikalischen Treibmittel können allein oder in beliebigen Kombinationen untereinander eingesetzt werden.

Besonders bevorzugte physikalische Treibmittel sind Fluoralkane und/oder Kohlenwasserstoffe.

Die Treibmittelkomponente c) wird üblicherweise in einer Menge von 2 bis 45 Gew.-%, bevorzugt 2 bis 30 Gew.-%, besonders bevorzugt 2 bis 20 Gew.-%, bezogen auf das Gesamtgewicht der Komponenten b) bis e) eingesetzt.

In einer bevorzugten Ausführungsform enthält das Treibmittelgemisch c) ausschließlich Kohlenwasserstoffe als physikalisches Treibmittel. Besonders bevorzugte Kohlenwasserstoffe sind n-Pentan, Cyclopentan, Iso-Pentan sowie Mischungen der Isomeren. Insbesondere wird eine Mischung aus n-Pentan und Iso-Pentan als physikalisches Treibmittel c) verwendet.

In einer bevorzugten Ausführungsform der Erfindung wird zusätzlich ein Flammschutzmittel d) verwendet. Das Flammschutzmittel d) wird vorzugsweise in einer Menge von 10 bis 55 Gew.-%, bezogen auf das Gesamtgewicht der Komponenten b) und d), eingesetzt.

Das Flammschutzmittel d) kann mit Isocyanatgruppen reaktive Wasserstoffatome enthalten. In einer bevorzugten Ausführungsform der Erfindung enthält das Flammschutzmittel keine mit Isocyanatgruppen reaktiven Wasserstoffatome.

Vorzugsweise werden Flammschutzmittel d) eingesetzt, die mindestens ein Phosphoratom im Molekül enthalten.

Dabei kann es sich vorzugsweise um die unten näher charakterisierten Produkte handeln.

Eine bevorzugte Gruppe sind Phosphor enthaltende Verbindungen mit einem Molekulargewicht kleiner als 400 g/mol, im speziellen kleiner als 300 g/mol, bevorzugt kleiner als 200 g/mol und besonders bevorzugt zwischen 150 und 190 g/mol und weniger als 4 im speziellen weniger als 3, noch spezieller weniger als 2 und im speziellen 1 Phosphor-Atom im Molekül. Bevorzugt sind Phosphonate und/oder Phosphate. Besonders bevorzugt werden Phosphate und Phosphonate ausgewählt aus der Gruppe, enthaltend Diethylethanphosphonat (DEEP), Dimethylpropylphosphonat (DMPP) und Triethylphosphat (TEP), besonders bevorzugt aus der Gruppe, enthaltend Diethylethanphosphonat (DEEP) und Triethylphosphat (TEP), und insbesondere wird Diethylethanphosphonat (DEEP) eingesetzt. Diese Verbindungen werden vorzugsweise in einer Menge von 5 bis 40 Gew.-%, bezogen auf Summe der Massen von b) und d) eingesetzt.

Eine weitere bevorzugte Gruppe von Phosphor enthaltenden Verbindungen sind solche mit einem Molekulargewicht größer als 300 g/mol. Diese weisen bevorzugt mindestens 1 Phosphoratom im Molekül auf. Bevorzugt werden Phosphonate und/oder Phosphate, im speziellen Phosphate. Vorzugsweise eingesetzt werden Diphenlykresylphosphat (DPK) und/oder Triphenlyphosphat insbesondere Diphenlykresylphosphat. Diese Verbindungen werden vorzugsweise in einer Menge von 10 bis 30 Gew.-%, bezogen auf die Summe der Massen von b) und d), eingesetzt.

Zu den übrigen für das erfindungsgemäße Verfahren eingesetzten Verbindungen ist im Einzelnen folgendes zu sagen:
Als Polyisocyanate a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Zur Herstellung von Polyurethan-Hartschaumstoffen wird insbesondere Roh-MDI eingesetzt.

Im Stand der Technik ist es gegebenenfalls üblich, Isocyanuratgruppen in das Polyisocyanat einzubauen. Die Bildung von Isocyanuratgruppen führt zu einer Verbesserung der Flammwidrigkeit der Schaumstoffe. Die Isocyanuratgruppen werden bevorzugt während der Umsetzung zum Schaumstoff durch Zusatz von speziellen Katalysatoren gebildet.

Die Komponente b) kann weiterhin optional Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Zusätzlich zu den Komponenten a) bis d) können die üblichen Katalysatoren, Schaumstabilisatoren sowie Hilfs- und/oder Zusatzstoffe eingesetzt werden.

Als Katalysatoren werden vorzugsweise tertiäre Amine, Zinn-Katalysatoren oder Alkalisalze verwendet. Es besteht auch die Möglichkeit, die Reaktionen ohne Katalyse ablaufen zu lassen. In diesem Fall wird die katalytische Aktivität von amingestarteten Polyolen ausgenutzt. Als Katalysatoren, die die Bildung von Isocyanuratgruppen katalysieren, gehören Carboxylate von Alkalimetallen.

Als Schaumstabilisatoren werden Stoffe bezeichnet, welche die Ausbildung einer regelmäßigen Zellstruktur bei der Schaumbildung fördern.

Beispielsweise seien genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und AIkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A. Als Alkoxylierungsreagenzien können beispielsweise Ethylenoxid, Propylenoxid, Poly-THF sowie höhere Homologe verwendet werden.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Zur Herstellung der Polyurethan-Hartschaumstoffe werden die Polyisocyanate a) und die Komponenten b) bis d) sowie die übrigen für die Herstellung der Polyurethane eingesetzten Verbindungen in solchen Mengen zur Umsetzung gebracht, dass die Isocyanat-Kennzahl des Schaums 90 bis 350, bevorzugt 100 bis 250, mehr bevorzugt 110 bis 200 beträgt und im speziellen 120 bis 200, und insbesondere 160 bis 200 beträgt.

Die Polyurethan-Hartschaumstoffe können diskontinuierlich oder kontinuierlich mit Hilfe bekannter Verfahren, beispielsweise mittels Doppelband, hergestellt werden. Besonders bevorzugt ist die Verarbeitung der erfindungsgemäßen Polyurethan-Hartschaumstoffe mittels eines kontinuierlichen Doppelbands.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, Schaumstabilisatoren und Flammschutzmitteln sowie den optionalen Katalysatoren und Hilfs- und/oder Zusatzstoffen zu einer sogenannten Polyolkomponente zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Die erfindungsgemäßen Polyurethan-Hartschaumstoffe weisen gute mechanische und Verarbeitungseigenschaften auf. Sie haften sehr gut an der Oberfläche der Substrate. Weiterhin verfügen sie über eine gute Flammfestigkeit.

Die Erfindung soll an den nachfolgenden Beispielen näher beschrieben werden.

### Ausgangsstoffe

Polyesterol 1: Veresterungsprodukt von Phthalsäureanhydrid, Diethylenglycol und Monoethylenglycol mit einer Hydroxylfunktionalität von 2,0 und einer Hydroxylzahl von 240 mg KOH/g.
Polyesterol 2: Veresterungsprodukt von Terephthalsäure, Diethylenglycol, Trimethylolpropan und Ölsäure mit einer Hydroxylfunktionalität von 2,3 und einer Hydroxylzahl von 245 mg KOH/g.
Polyetherol 1: Polyetherpolyol mit einer Hydroxylzahl von 490 mg KOH/g, hergestellt durch Polyaddition von Propylenoxid an einer Saccharose/Glycerin-Mischung als Startermolekül.
Polyetherol 2: Polyetherpolyol mit einer Hydroxylzahl von 490 mg KOH/g, hergestellt durch Polyaddition von Propylenoxid an eine 72 %-igen wässrige Sorbitlösung als Startermolekül
Polyetherol 3 Polyetherpolyol mit einer Hydroxylzahl von 160 mgKOH/g hergestellt durch Polyaddition von Propylenoxid an Trimethylolpropan
Polyetherol 4 Polyetherpolyol, hergestellt durch Polyaddition von Ethylenoxid an Ethylenglycol mit einer Hydroxylfunktionalität von 2 und einer Hydroxylzahl von 190 mg KOH/g
Polyetherol 5 Polyetherpolyol, hergestellt durch Polyaddition von Propylenoxid an Propylenglycol mit einer Hydroxylfunktionalität von 2 und einer Hydroxylzahl von 104 mg KOH/g
TCPP Tris-2-Chlorisopropylphosphat
Stabilisator; Niax^{®} Silicone L 6635 (siliconhaltiger Stabilisator) der Fa. Momentive
B-Komponente
Polymer MDI (Lupranat^{®} M50 ) mit einem NCO-Gehalt von 31 % und einer Viskosität von 500 mPa s bei 25°C.
Zusatzstoffe
DMCHA Dimethylcyclohexylamin
Katalysator 2 47%ige Kaliumacetatlösung in 95 % igem Monoethylenglycol Wasser
5,5 Teile einer n-Pentan-Isopentan-Mischung im Verhältnis 80:20

### Messmethoden:

### Härtung

Die Härtung wurde mit dem Bolzentest ermittelt. Dazu wird 2,5, 3, 4, 5, 6 und 7 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Als Maß für die Sprödigkeit des Polyisocyanurat-Hartschaumstoffes wurde der Zeitpunkt ermittelt, bei dem die Oberfläche des Hartschaumstoffes beim Bolzentest sichtbare Bruchzonen aufwies.

### Flammfestigkeit

Die Flammhöhe wurde nach EN ISO 11925-2 gemessen.

Die Hydroxylzahlen wurden nach der DIN 53240 bestimmt.

### Haftung:

Die Ermittlung der Haftung erfolgte über einen Schälhaftungstest. Dazu wird ein Prüfkörper in einer temperierbaren geschlossenen Kastenform mit den Maßen 200 mm x 200 mm x 200 mm hergestellt. Der Prüfkörper wird derart hergestellt, dass der Schaum einen Verdichtungsgrad von 1,15 ± 0.3 aufweist. Zudem wird auf der unteren Seite ein aluminiumbeschichtetes Papier eingeschäumt. Nach fünf Minuten wird der Prüfkörper entformt. Nach 24 Stunden Lagerung wird das Aluminiumpapier auf der Unterseite mit einer Schablone parallel eingeschnitten. Der parallele Streifen wird ca. 3 cm weit abgezogen und in eine Prüfvorrichtung in einer Zwick Zugprüfmaschine eingespannt. Nun zieht die Zugprüfmaschine den Folienstreifen mit einer gleichmäßigen Geschwindigkeit von 100 mm/min ab. In der Zugvorrichtung ist ein Kraftmesser integriert, der die für das Abziehen der Folie nötige Kraft und damit den Schälhaftungswert misst.

Die nachfolgend angegebenen Schälhaftungswerte sind das arithmetische Mittel aus 2 unabhängigen Wiederholungsversuchen.

### Biegefestigkeit:

Die Ermittlung der Biegefestigkeit erfolgte mittels 3-Punkt Biegeversuch in Anlehnung an die DIN 53423. Es werden drei Prüfkörper mit den Ausmaßen 120 mm x 25 mm x 20 mm aus einem Schaumwürfel mit Kantenlänge 20 cm gesägt. Im Biegeversuch wird der Prüfkörper, der auf zwei Stützen mit dem Abstand100 mm positioniert wird, in der Mitte durch eine Einzelkraft F beansprucht. Als Messergebnisse werden die Durchbiegung sowie die Kraft beim Bruch bzw. bei 20 mm Durchbiegung bestimmt. Daraus wird die Biegefestigkeit berechnet, die gleich dem Quotienten aus Biegemoment in der Mitte des Prüfkörpers beim Bruch und dem Widerstandsmoment seines Querschnittes ist.

### Herstellung der Polyurethan-Hartschaumstoffe

Die isocyanate sowie die mit isocyanat reaktiven Komponenten wurden zusammen mit den Treibmitteln, Katalysatoren und allen weiteren Zusatzstoffen bei einem konstanten molaren Verhältnis von OH zu NCO-Funktionalitäten von 100:153 +/- 6 verschäumt. Dabei wurde jeweils auf eine konstante Abbindezeit von 49 +/- 1 Sekunden durch Variation der DMCHA-Menge sowie eine Gesamtrohdichte von 38,5 +/-1 g/L durch Variation der Wassermenge eingestellt. Die Menge des Katalysators 2 wurde bei 1,5 Gewichts-% und die des Pentans bei 5,5 Gewichts-%, bezogen auf 100 Gewichts-% der Mischung aus den Polyesteralkoholen und Polyetheralkoholen sowie des Flammschutzmittels und Stabilisators sowie 0,5 Teilen Wassers konstant gehalten.

**Tabelle 1: Effekt einer zu hohen Hydroxylzahl der Polyolmischung**

| | erfindungsgemäßes Beispiel 1 | erfindungsgemäßes Beispiel 1a |
|---|---|---|
| Polyesterol 2 | 39 | 16 |
| Polyetherol 1 | 27,5 | 50,5 |
| Polyetherol 4 | 5,5 | 5,5 |
| Polyetherol 5 | | |
| TCPP | 25 | 25 |
| Wasser | 0,5 | 0,5 |
| Stabilisator | 2,5 | 2,5 |
| | | |
| Polyol-OHZ | 271 | 328 |
| | | |
| B2-Bestimmung [cm] | | |
| 1. Wert | 11 | 15 |
| 2. Wert | 9 | 16 |
| 3. Wert | 10 | 15 |
| 4. Wert | 11 | 16 |
| | | |
| 82 Mittelwert [cm] | 10,25 | 15,5 |

Tabelle 1 zeigt, dass zu hohe OH-Zahlen der Polyolkomponente die Flammwidrigkeit negativ beeinflussen.

**Tabelle 2: Effekt einer zu niedrigen Hydroxylzahl der Polyolmischung bzw. des Fehlens eines Polyetheralkohols bii)**

| | erfindungsgemäßes Beispiel 1 | Vergleichsbeispiel 2 | Vergleichsbeispiel 3 | VergleichesBeispiel 4 |
|---|---|---|---|---|
| Polyesterol 2 | 39 | 39 | 72 | 66,5 |
| Polyetherol 1 | 27,5 | | | |
| Polyetherol 4 | 5,5 | 5,5 | | 5,5 |
| Polyetherol 5 | | 27,5 | | |
| TCPP | 25 | 25 | 25 | 25 |
| Wasser | 0,5 | 0,5 | 0,5 | 0,5 |
| Stabilisator | 2,5 | 2,5 | 2,5 | 2,5 |
| | | | | |
| Polyol-OHZ | 271 | 165 | 208 | 204 |
| | | | | |
| Bolzentest [N] | | | | |
| 2,5 min | 47 | 19 | 30 | 34 |
| 3 min | 61 | 23 | 38 | 43 |
| 4 min | 80 | 30 | 55 | 58 |
| 5 min | 97 | 37 | 67 | 69 |
| 6 min | 108 | 42 | 73 | 82 |
| 7 min | 119 | 46 | 84 | 88 |
| | | | | |
| Schälhaftung [N] | 9,4 | 5,8 | 5,2 | 3,8 |

Tabelle 2 zeigt, dass zu niedrige OH-Zahlen der Polyolkomponente beziehungsweise das Fehlen des Polyetheralkohols bii) die Schälhaftung und Härtung negativ beeinflussen.

**Tabelle 3: Effekt des Einsatzes eines Polyetheralkohols mit niedriger Funktionalität und niedriger Hydroxylzahl**

| | erfindungsgemäßes Beispiel 1 | Vergleichsbeispiel 5 |
|---|---|---|
| Polyesterol 2 | 39 | 39 |
| Polyetherol 1 | 27,5 | 33 |
| Polyetherol 3 | | |
| Polyetherol 4 | 5,5 | |
| Polyetherol 5 | | |
| TCPP | 25 | 25 |
| Wasser | 0,5 | 0,5 |
| Stabilisator | 2,5 | 2,5 |
| | | |
| Polyol-OHZ | 271 | 288 |
| | | |
| B2-Bestimmung [cm] | | |
| 1. Wert | 11 | 12 |
| 2. Wert | 9 | 13 |
| 3. Wert | 10 | 12 |
| 4. Wert | 11 | 14 |
| | | |
| B2 Mittelwert [cm] | 10,25 | 12,75 |
| | | |
| Schälhaftung [N] | 9,4 | 8,7 |

Tabelle 3 zeigt, dass der Einsatz eines niederfunktionellen Polyethers mit einer niedrigen Hydroxylzahl in der Polyolkomponente die Brandwidrigkeit und Schälhaftung des Schaums verbessert.

**Tabelle 4: Effekt der Verwendung eines ölsäurebasierten Polyesteralkohols**

| | Erfindungsgemäßes Beispiel 2 | Vergleichsbeispiel 6 |
|---|---|---|
| Polyesterol 1 | | 39,5 |
| Polyesterol 2 | 39 | |
| Polyetherol 1 | 22,5 | 27,5 |
| Polyetherol 3 | 5 | 5 |
| Polyetherol 4 | 5,5 | |
| TCPP | 25 | 25 |
| Wasser | 0,5 | 0,5 |
| Stabilisator | 2,5 | 2,6 |
| | | |
| B2-Bestimmung [cm] | | |
| 1. Wert | 12 | 12 |
| 2. Wert | 12 | 13 |
| 3. Wert | 10 | 13 |
| 4. Wert | 11 | 12 |
| B2 Mittelwert | 11,25 | 12,5 |
| | | |
| Schälhaftung [N] | 9,3 | 5,9 |

Tabelle 4 zeigt, dass die Verwendung eines ölsäurebasierten Esters die Haftung deutlich verbessert. Ferner zeigt diese Tabelle, dass der Einsatz eines Terephthalsäure basierten Esters das Brandverhalten deutlich verbessert.

**Tabelle 5: Effekt des Einsatzes eines mit Sorbit gestarteten Polyetheralkohols**

| | Erfindungsgemäßes Beispiel 1 | Erfindungsgemäßes Beispiel 7 |
|---|---|---|
| Polyesterol 2 | 39 | 39 |
| Polyetherol 1 | 27,5 | |
| Polyetherol 2 | | 27,5 |
| Polyetherol 4 | 5,5 | 5,5 |
| TCPP | 25 | 25 |
| Wasser | 0,5 | 0,5 |
| Stabilisator | 2,5 | 2,5 |
| | | |
| Polyol-OHZ | 271 | 271 |
| | | |
| Bolzentest [N] | | |
| 2,5 min | 47 | 50 |
| 3 min | 61 | 65 |
| 4 min | 80 | 84 |
| 5 min | 97 | 99 |
| 8 min | 108 | 115 |
| 7 min | 119 | 116 |
| | | |
| Biegefestigkeit [N/mm²] | 0,17 | 0,21 |

Tabelle 5 zeigt, dass der Einsatz eines mit Sorbit gestarteten in der Polyolkomponente die Härtung sowie Biegefestigkeit verbessert.

## Patentansprüche

1. Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Gegenwart von
c) Treibmitteln,
in Gegenwart von Flammschutzmitteln d), **dadurch gekennzeichnet, dass** die Verbindungen mit mindestens zwei mit Isocyanatgruppen reaktiven Wasserstoffatomen b)
- mindestens einen aromatischen Polyesteralkohol bi) hergestellt unter Verwendung von mindestens einer Fettsäure,
- mindestens einen Polyetheralkohol bii) mit einer Funktionalität von 4 bis 8 und einer Hydroxylzahl im Bereich zwischen 300 und 600 mgKOH/g und
- mindestens einen Polyetheralkohol biii) mit einer Funktionalität von 2 bis 4 und einer Hydroxylzahl Bereich zwischen 100 und kleiner 300 mgKOH/g enthalten, wobei das Gewichtsverhältnis der Komponente bi) zur Summe der Komponenten bii) und biii) kleiner 4 ist und größer 0,15 ist.

2. Verfahren nach Anspruch 1, **dadurch gekennzeichnet, dass** die Hydroxylzahl der Komponente b) mindestens 175 mgKOH/g ist.

3. Verfahren nach Anspruch 1, **dadurch gekennzeichnet, dass** die Hydroxylzahl der Komponente b) höchstens 325 mgKOH/g ist.

4. Verfahren nach Anspruch 1, **dadurch gekennzeichnet, dass** der Polyesteralkohol bi) eine Funktionalität von 2 bis 3 und eine Hydroxylzahl von 200 bis 300 mgKOH/g aufweist.

5. Verfahren nach Anspruch 1, **dadurch gekennzeichnet, dass** der Polyesteralkohol bi) unter Verwendung von aromatischen Carbonsäuren oder deren Anhydriden hergestellt wurde.

6. Verfahren nach Anspruch 1, **dadurch gekennzeichnet, dass** der Polyesteralkohol bi) unter Verwendung von aromatischen Carbonsäuren oder deren Anhydriden, ausgewählt aus der Gruppe, enthaltend Terephthalsäure, Phthalsäure und Phthalsäureanhydrid.

7. Verfahren nach Anspruch 1, **dadurch gekennzeichnet, dass** der Polyesteralkohol bi) unter Verwendung von Estern aromatischer Carbonsäuren hergestellt wurde.

8. Verfahren nach Anspruch 1, **dadurch gekennzeichnet, dass** der Polyesteralkohol bi) unter Verwendung von Estern aromatischer Carbonsäuren, ausgewählt aus der Gruppe, enthaltend Polyethylenterephthalat und Dimethylterephthalat, hergestellt wurde.

9. Verfahren nach Anspruch 6, **dadurch gekennzeichnet, dass** der Polyesteralkohol bi) unter Verwendung von Terephthalsäure hergestellt wurde.

10. Verfahren nach Anspruch 1, **dadurch gekennzeichnet, dass** der Polyesteralkohol bi) unter Verwendung von mindestens 50 Gew.-%, bezogen auf das Gewicht der eingesetzten Carbonsäure, an Terephthalsäure hergestellt wurde.

11. Verfahren nach Anspruch 1, **dadurch gekennzeichnet, dass** der Polyesteralkohol bi) einen Gehalt an Komponenten mit einer Funktionalität von ≥ 2,9 von mindestens 200 mmol/kg Polyesteralkohol enthält.

12. Verfahren nach Anspruch 1, **dadurch gekennzeichnet, dass** als Treibmittel c) Kohlenwasserstoffe eingesetzt werden.

13. Verfahren nach Anspruch 1, **dadurch gekennzeichnet, dass** das Flammschutzmittel d) in einer Menge von 10 bis 55 Gew.-%, bezogen auf das Gewicht der Summe der Komponenten b) und d), eingesetzt wird.

14. Verfahren nach Anspruch 1, **dadurch gekennzeichnet, dass** das Flammschutzmittel keine mit Isocyanatgruppen reaktiven Gruppen enthält.

15. Verfahren nach Anspruch 1, **dadurch gekennzeichnet, dass** das Flammschutzmittel Phosphoratome im Molekül enthält.

16. Polyurethan-Hartschaumstoffe, herstellbar nach einem der Ansprüche 1 bis 15.

## Claims

1. A process for producing rigid polyurethane foams by reacting
a) polyisocyanates with
b) compounds having at least two hydrogen atoms which are reactive toward isocyanate groups in the presence of
c) blowing agents,
in the presence of flame retardants d), wherein the compounds b) having at least two hydrogen atoms which are reactive toward isocyanate groups comprise
- at least one aromatic polyester alcohol bi) prepared using at least one fatty acid,
- at least one polyether alcohol bii) having a functionality of from 4 to 8 and a hydroxyl number in the range from 300 to 600 mg KOH/g, and
- at least one polyether alcohol biii) having a functionality of from 2 to 4 and a hydroxyl number in the range from 100 to < 300 mg KOH/g,
where the weight ratio of the component bi) to the sum of the components bii) and biii) is less than 4 and greater than 0.15.

2. The process according to claim 1, wherein the hydroxyl number of the component b) is at least 175 mg KOH/g.

3. The process according to claim 1, wherein the hydroxyl number of the component b) is not more than 325 mg KOH/g.

4. The process according to claim 1, wherein the polyester alcohol bi) has a functionality of from 2 to 3 and a hydroxyl number of from 200 to 300 mg KOH/g.

5. The process according to claim 1, wherein the polyester alcohol bi) has been prepared using aromatic carboxylic acids or anhydrides thereof.

6. The process according to claim 1, wherein the polyester alcohol bi) has been prepared using aromatic carboxylic acids or anhydrides thereof selected from the group consisting of terephthalic acid, phthalic acid and phthalic anhydride.

7. The process according to claim 1, wherein the polyester alcohol bi) has been prepared using esters of aromatic carboxylic acids.

8. The process according to claim 1, wherein the polyester alcohol bi) has been prepared using esters of aromatic carboxylic acids selected from the group consisting of polyethylene terephthalate and dimethyl terephthalate.

9. The process according to claim 6, wherein the polyester alcohol bi) has been prepared using terephthalic acid.

10. The process according to claim 1, wherein the polyester alcohol bi) has been prepared using at least 50% by weight, based on the weight of the carboxylic acid used, of terephthalic acid.

11. The process according to claim 1, wherein the polyester alcohol bi) comprises a content of components having a functionality of ≥ 2.9 of at least 200 mmol/kg of polyester alcohol.

12. The process according to claim 1, wherein hydrocarbons are used as blowing agents c).

13. The process according to claim 1, wherein the flame retardant d) is used in an amount of from 10 to 55% by weight, based on the weight of the sum of the components b) and d) .

14. The process according to claim 1, wherein the flame retardant does not comprise any groups which are reactive toward isocyanate groups.

15. The process according to claim 1, wherein the flame retardant comprises phosphorus atoms in the molecule.

16. A rigid polyurethane foam which can be produced according to any of claims 1 to 15.

## Revendications

1. Procédé pour la production de mousses rigides de polyuréthane, par mise en réaction
a) de polyisocyanates avec
b) des composés comportant au moins deux atomes d'hydrogène réactifs avec des groupes isocyanate, en présence
c) d'agents d'expansion,
en présence d'agents ignifuges d), **caractérisé en ce que** les composés b) comportant au moins deux atomes d'hydrogène réactifs avec des groupes isocyanate contiennent
- au moins un polyesteralcool aromatique bi) préparé avec utilisation d'au moins un acide gras,
- au moins un polyétheralcool bii) ayant une fonctionnalité de 4 à 8 et un indice de groupes hydroxy dans la plage comprise entre 300 et 600 mg de KOH/g et
- au moins un polyétheralcool biii) ayant une fonctionnalité de 2 à 4 et un indice de groupes hydroxy dans la plage comprise entre 100 et moins de 300 mg de KOH/g, le rapport pondéral du composant bi) à la somme des composants bii) et biii) étant inférieur à 4 et supérieur à 0,15.

2. Procédé selon la revendication 1, **caractérisé en ce que** l'indice de groupes hydroxy du composant b) est d'au moins 175 mg de KOH/g.

3. Procédé selon la revendication 1, **caractérisé en ce que** l'indice de groupes hydroxy du composant b) est d'au maximum 325 mg de KOH/g.

4. Procédé selon la revendication 1, **caractérisé en ce que** le polyesteralcool bi) présente une fonctionnalité de 2 à 3 et un indice de groupes hydroxy de 200 à 300 mg de KOH/g.

5. Procédé selon la revendication 1, **caractérisé en ce que** le polyesteralcool bi) a été préparé avec utilisation d'acides carboxyliques aromatiques ou de leurs anhydrides.

6. Procédé selon la revendication 1, **caractérisé en ce que** le polyesteralcool bi) a été préparé avec utilisation d'acides carboxyliques aromatiques ou de leurs anhydrides, choisis dans le groupe contenant l'acide téréphtalique, l'acide phtalique et l'anhydride phtalique.

7. Procédé selon la revendication 1, **caractérisé en ce que** le polyesteralcool bi) a été préparé avec utilisation d'esters d'acides carboxyliques aromatiques.

8. Procédé selon la revendication 1, **caractérisé en ce que** le polyesteralcool bi) a été préparé avec utilisation d'esters d'acides carboxyliques aromatiques choisis dans le groupe contenant le poly(éthylènetéréphtalate) et le téréphtalate de diméthyle.

9. Procédé selon la revendication 6, **caractérisé en ce que** le polyesteralcool bi) a été préparé avec utilisation d'acide téréphtalique.

10. Procédé selon la revendication 1, **caractérisé en ce que** le polyesteralcool bi) a été préparé avec utilisation d'au moins 50 % en poids, par rapport au poids de l'acide carboxylique utilisé, d'acide téréphtalique.

11. Procédé selon la revendication 1, **caractérisé en ce que** le polyesteralcool bi) présente une teneur en composants, ayant une fonctionnalité de ≥ 2,9, d'au moins 200 mmoles/kg de polyesteralcool.

12. Procédé selon la revendication 1, **caractérisé en ce qu'**on utilise comme agent d'expansion c) des hydrocarbures.

13. Procédé selon la revendication 1, **caractérisé en ce qu'**on utilise l'agent ignifuge d) en une quantité de 10 à 55 % en poids, par rapport au poids de la somme des composants b) et d).

14. Procédé selon la revendication 1, **caractérisé en ce que** l'agent ignifuge ne contient pas de groupes réactifs avec des groupes isocyanate.

15. Procédé selon la revendication 1, **caractérisé en ce que** l'agent ignifuge contient des atomes de phosphore dans la molécule.

16. Mousses rigides de polyuréthane, pouvant être produites selon l'une quelconque des revendications 1 à 15.
